# EUROPEAN PATENT APPLICATION

(11) **EP 3 121 713 A2**
(43) Date of publication of application: **25.01.2017**
(21) Application number: 16156348.1
(22) Date of filing: 18.02.2016
(51) Int. Cl.: G06F 9/445, G06Q 50/00

(54) **METHODS AND SYSTEMS FOR INSTALLING AN APPLICATION VERSION VIA CLOSE-RANGE COMMUNICATIONS**

(30) Priority: 29.06.2015 US 201514754247; 30.06.2015 WO PCT/US2015/038647
(71) Applicant: Facebook, Inc., Menlo Park, CA 94025 (US)
(72) Inventor: LOCHAN, Gaurav, Menlo Park, CA California 94025 (US); SRINIVASAN, Ragavan, Menlo Park, CA California 94025 (US)
(74) Representative: Schröer, Gernot H.

(57) **Abstract**

A first electronic device stores in its memory one or more installation files for a first version of an application. A local connection is established between the first electronic device and a second electronic device. The local connection is independent of Internet connectivity. Using the local connection, a determination is made as to whether the first version of the application is installed on the second electronic device. In response to a determination that the first version of the application is not installed on the second electronic device, the first electronic device sends, to the second electronic device through the local connection, the one or more installation files for the first version of the application.

## Description

### TECHNICAL FIELD

This relates generally to device communications, including but not limited to installing applications on electronic devices by transferring installation files through a local connection between electronic devices.

### BACKGROUND

Mobile devices have become an increasingly dominant means through which consumers access, download, and consume electronic content over the Internet.

Despite substantial advancements in telecommunications technology, however, achievable data rates for accessing content on the Internet are still limited. Furthermore, considering the relatively large file sizes for mobile applications, in addition to the limited availability of Internet access in certain geographic regions, such as developing countries, consumers often have difficulty downloading applications and therefore are often left frustrated when using mobile devices.

### SUMMARY

Accordingly, there is a need for methods, devices, and systems for installing updated applications on electronic devices by transferring installation files through an established local connection between electronic devices. By establishing a local connection between devices using a close-range communications protocol (e.g., Bluetooth or WiFi Direct), devices that are unable to establish Internet connectivity or have slow Internet connectivity can receive installation files from nearby connected devices. In doing so, devices may install or update applications that would otherwise be inaccessible due to poor or absent Internet connectivity. Such methods, devices, and systems optionally complement or replace conventional methods for installing and updating applications on electronic devices.

In accordance with some embodiments, a method is performed at a first electronic device (e.g., a client device) with one or more processors and memory storing instructions for execution by the one or more processors. The method includes storing in the memory one or more installation files for a first version of an application. A local connection is established with a second electronic device, the local connection being independent of Internet connectivity. Using the local connection, the method includes determining whether the first version of the application is installed on the second electronic device. In response to a determination that the first version of the application is not installed on the second electronic device, the first electronic device sends, to the second electronic device through the local connection, the one or more installation files for the first version of the application.

In accordance with some embodiments, an electronic device (e.g., a client device) includes one or more processors, memory, and one or more programs; the one or more programs are stored in the memory and configured to be executed by the one or more processors. The one or more programs include instructions for performing the operations of the method described above. In accordance with some embodiments, a non-transitory computer-readable storage medium has stored therein instructions that, when executed by the electronic device, cause the electronic device to perform the operations of the method described above.

Thus, electronic devices are provided with more effective and efficient methods for installing and updating applications on electronic devices, thereby increasing the effectiveness and efficiency of such devices and user satisfaction with such devices.

Embodiments disclosed in the attached claims are directed to a method, a storage medium, a system and a computer program product, wherein any feature mentioned in one claim category, e.g. method, can be claimed in another claim category, e.g. system, as well. The dependencies or references back in the attached claims are chosen for formal reasons only. However any subject matter resulting from a deliberate reference back to any previous claims (in particular multiple dependencies) can be claimed as well, so that any combination of claims and the features thereof is disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any other embodiments or features described or depicted herein or with any of the features of the attached claims.

In some embodiments, a method comprises:
at a first electronic device with one or more processors and memory storing instructions for execution by the one or more processors:
   storing in the memory one or more installation files for a first version of an application;
   establishing a local connection with a second electronic device, the local connection being independent of Internet connectivity;
   using the local connection, determining whether the first version of the application is installed on the second electronic device; and
   in response to a determination that the first version of the application is not installed on the second electronic device, sending, to the second electronic device through the local connection, the one or more installation files for the first version of the application.

Establishing the local connection may comprise pairing the first electronic device with the second electronic device using a wireless communications protocol.

Establishing the local connection may comprise connecting to the second electronic device over a personal-area network.

Establishing the local connection may comprise connecting to the second electronic device over a peer-to-peer network.

Establishing the local connection may be performed in response to a determination that a congestion threshold for the Internet connectivity is satisfied.

Establishing the local connection may be performed in response to a determination that the second device cannot establish Internet connectivity.

In some embodiments, the method comprises:
determining whether the first version of the application is installed on the second electronic device comprises determining whether a second version of the application that predates the first version of the application is installed on the second electronic device;
the determination that the first version of the application is not installed on the second electronic device is a determination that the second version of the application is installed on the second electronic device, and
the one or more installation files for the first version of the application comprise updates for updating the application on the second electronic device from the second version to the first version.

In some embodiments, the method comprises:
determining whether the first version of the application is installed on the second electronic device comprises determining whether any version of the application is installed on the second electronic device;
the determination that the first version of the application is not installed on the second electronic device is a determination that no version of the application is installed on the second electronic device, and
the one or more installation files for the first version of the application comprise one or more files for installing the first version of the application in its entirety.

In some embodiments, determining whether the first version of the application is installed on the second electronic device comprises:
providing a software updater application to the second electronic device through the local connection, for installation on the second electronic device; and
receiving, from the software updater application on the second electronic device, through the local connection, an indication of whether the first version of the application is installed on the second electronic device.

In some embodiments, the method further comprises, before sending the one or more installation files, displaying a message on the first electronic device with instructions for updating security settings on the second electronic device to enable installation of the first version of the application.

In some embodiments, the method, wherein the application is an application for connecting to a social networking service, and a first user associated with the first electronic device is a user of the social networking service, the method further comprises, at the first electronic device:
after the first version of the application has been installed on the second electronic device:
   receiving, from the second electronic device through the local connection, a request to create an account with the social networking service for a second user associated with the second electronic device; and
   sending the request to a remote server through a communications channel distinct from the local connection.

In some embodiments, the method further comprises automatically displaying a message on the first electronic device prompting the first user to associate with the second user on the social networking service after sending the request to create the account to the remote server.

In some embodiments, wherein the application is an application for connecting to a social networking service, and a first user associated with the first electronic device and a second user associated with the second electronic device are users of the social networking service, the method further comprises, at the first electronic device:
receiving, from the social networking service through a communications channel distinct from the local connection, content for the second user; and
sending, to the second electronic device through the local connection, the content from the social networking service for display on the second electronic device

Sending the content from the social networking service may be performed in accordance with a determination that the second electronic device has no Internet connectivity.

In some embodiments, sending the one or more installation files for the first version of the application comprises:
sending a first plurality of packets through the local connection to the second electronic device,
after sending the first plurality of packets, detecting loss of the local connection with the second electronic device,
reestablishing the local connection with the second electronic device, and
after reestablishing the local connection, sending a second plurality of packets through the local connection to the second electronic device.

In some embodiments, the method comprises:
the first electronic device is one of a plurality of electronic devices within wireless communication range of the second electronic device; and
the first electronic device sends the one or more installation files for the first version of the application in accordance with a determination that respective versions of the application on other electronic devices of the plurality of electronic devices predate the first version of the application.

In some embodiments, the method comprises:
the application is a first application; and
the first electronic device sends the one or more installation files for the first version of the application in accordance with a determination that a priority of the first application supersedes a priority of a second application on the second electronic device.

In some embodiments, the method further comprises determining whether the first version of the application is compatible with the second electronic device;
wherein sending the one or more installation files to the second electronic device through the local connection is performed in further response to a determination that the first version of the application is compatible with the second electronic device.

In some embodiments, an electronic device comprises:
one or more processors; and
memory storing one or more programs for execution by the one or more processors, the one or more programs including instructions for:
   storing in the memory one or more installation files for a first version of an application;
   establishing a local connection with a second electronic device, the local connection being independent of Internet connectivity;
   using the local connection, determining whether the first version of the application is installed on the second electronic device; and
   in response to a determination that the first version of the application is not installed on the second electronic device, sending, to the second electronic device through the local connection, the one or more installation files for the first version of the application.

In some embodiments, a non-transitory computer-readable storage medium stores one or more programs for execution by one or more processors of a first electronic device, the one or more programs including instructions for:
storing in the memory one or more installation files for a first version of an application;
establishing a local connection with a second electronic device, the local connection being independent of Internet connectivity;
using the local connection, determining whether the first version of the application is installed on the second electronic device; and
in response to a determination that the first version of the application is not installed on the second electronic device, sending, to the second electronic device through the local connection, the one or more installation files for the first version of the application.

In some embodiments, one or more computer-readable non-transitory storage media embody software that is operable when executed to perform a method according to any of the above mentioned embodiments.

In some embodiments, a system comprises: one or more processors; and at least one memory coupled to the processors and comprising instructions executable by the processors, the processors operable when executing the instructions to perform a method according to any of the above mentioned embodiments.

In some embodiments, a computer program product, preferably comprising a computer-readable non-transitory storage media, is operable when executed on a data processing system to perform a method according to any of the above mentioned embodiments.

### BRIEF DESCRIPTION OF THE DRAWINGS

For a better understanding of the various described embodiments, reference should be made to the Description of Embodiments below, in conjunction with the following drawings. Like reference numerals refer to corresponding parts throughout the figures and description.
- Figures 1A-1C: are block diagrams illustrating examples of network architectures, in accordance with some embodiments.
- Figure 2: is a block diagram illustrating an exemplary social-network system in accordance with some embodiments.
- Figure 3: is a block diagram illustrating an exemplary client device in accordance with some embodiments.
- Figures 4A-4B: illustrate exemplary graphical user interfaces on a client device for facilitating application installation and user association requests, in accordance with some embodiments.
- Figures 5A-5B: are flow diagrams illustrating a method of installing a version of an application using a local connection, in accordance with some embodiments.

### DESCRIPTION OF EMBODIMENTS

Reference will now be made to embodiments, examples of which are illustrated in the accompanying drawings. In the following description, numerous specific details are set forth in order to provide an understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It will also be understood that, although the terms first, second, etc. are, in some instances, used herein to describe various elements, these elements should not be limited by these terms. These terms are used only to distinguish one element from another. For example, a first version could be termed a second version, and, similarly, a second version could be termed a first version, without departing from the scope of the various described embodiments. The first version and the second version are both versions, but they are not the same version.

The terminology used in the description of the various embodiments described herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting" or "in accordance with a determination that," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]" or "in accordance with a determination that [a stated condition or event] is detected," depending on the context.

As used herein, the term "exemplary" is used in the sense of "serving as an example, instance, or illustration" and not in the sense of "representing the best of its kind."

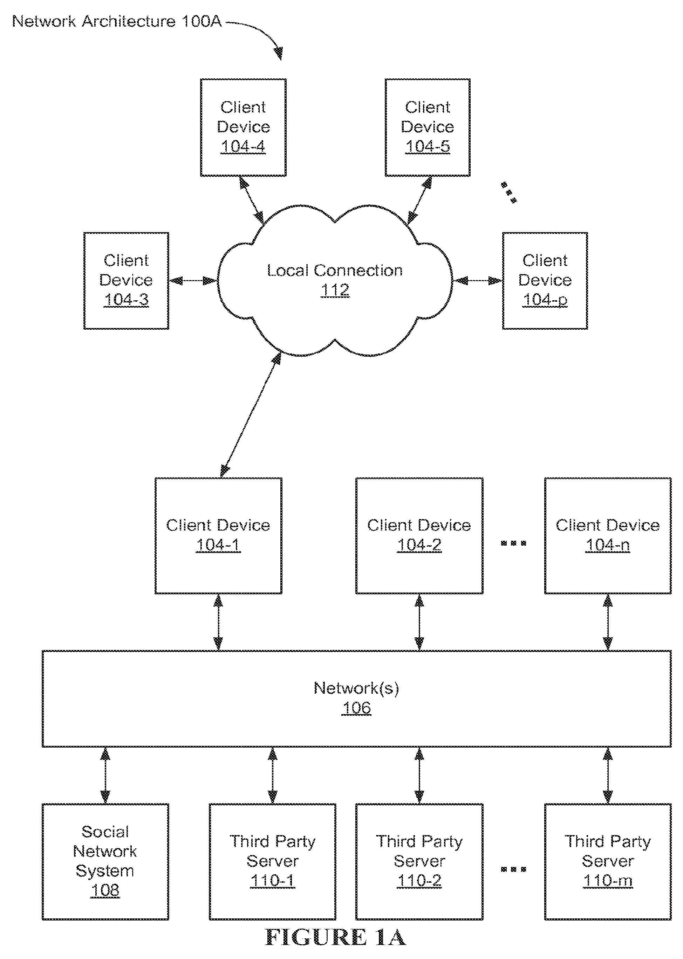

Figures 1A-1C are block diagrams illustrating examples of network architectures, in accordance with some embodiments.

Figure 1A illustrates a network architecture 100A of a social network in accordance with some embodiments. The network architecture 100A includes a number of client devices (also called "client systems," "client computers," or "clients") 104-1, 104-2, ... 104-n communicably connected to an electronic social-network system 108 by one or more networks 106 (e.g., the Internet, cellular telephone networks, mobile data networks, other wide area networks, local area networks, metropolitan area networks, and so on). In some embodiments, the one or more networks 106 include a public communication network (e.g., the Internet and/or a cellular data network), a private communications network (e.g., a private LAN or leased lines), or a combination of such communication networks.

The network architecture 100A includes a local connection 112 for communicably connecting one or more client devices together (e.g., 104-1 and 104-3, 104-4, 104-5, ... 104-p). In some embodiments, multiple client devices 104 are interconnected through the local connection 112 using a wireless communications protocol (e.g., IEEE 802.15.4, Wi-Fi, ZigBee, 6LoWPAN, Thread, Z-Wave, Bluetooth, ISA100.11a, WirelessHART, MiWi, NFC, etc.). For example, the client devices 104-1 and 104-3, 104-4, 104-5, ... 104-p compose a personal-area network (PAN) (e.g., implemented using Bluetooth or ZigBee) or a peer-to-peer (P2P) network (e.g., implemented using WiFi Direct). In some embodiments, all of the client devices 104 connected through the local connection 112 are within wireless communication range of each other. In some embodiments, all of the client devices 104-3, 104-4, 104-5, ... 104-p are within wireless communication range of the client device 104-1 but not necessarily each other.

Client devices 104-3, 104-4, 104-5,...104-p may be unable to connect to the social network system 108 directly through the one or more networks 106 (e.g., due to network congestion, poor cellular reception, an associated user not being subscribed to network services, etc.). Instead, using the local connection 112, these client devices may indirectly access the social network system 108 through the client device 104-1, which is connected to the social network system 108 through the one or more networks 106. The client device 104-1 therefore acts as an intermediary device (sometimes referred to as a "host" or "sending" device) through which client devices 104-3, 104-4, 104-5,...104-p (sometimes referred to as "receiving" devices) can send and retrieve data over the one or more networks 106 (e.g., installation files for an application provided by the social network system 108). Thus, in some implementations, the client device 104-1 retrieves and shares data (e.g., installation files) requested by other client devices using the local connection 112. (Alternatively, the client device 104-1 shares files that it has previously downloaded before receiving a request from a receiving device.)

In some embodiments, the client devices 104 are computing devices such as smart watches, personal digital assistants, portable media players, smart phones, tablet computers, 2D gaming devices, 3D (e.g., virtual reality) gaming devices, laptop computers, desktop computers, televisions with one or more processors embedded therein or coupled thereto, in-vehicle information systems (e.g., an in-car computer system that provides navigation, entertainment, and/or other information), and/or other appropriate computing devices that can be used to communicate with the social-network system 108. In some embodiments, the social-network system 108 is a single computing device such as a computer server, while in other embodiments, the social-network system 108 is implemented by multiple computing devices working together to perform the actions of a server system (e.g., cloud computing).

In some embodiments, client devices 104 are associated with users (not shown) who employ the client devices 104 to access the social-network system 108 and to participate in a corresponding social-networking service provided by the social-network system 108. For example, one or more of the client devices 104 execute web browser applications that can be used to access the social-networking service. As another example, one or more of the client devices 104 execute software applications that are specific to the social-networking service (e.g., social-networking "apps" running on smart phones or tablets, such as a Facebook social-networking application running on an iPhone, Android, or Windows smart phone or tablet).

Users interacting with the client devices 104 can participate in the social-networking service provided by the social-network system 108 by posting information, such as text comments (e.g., updates, announcements, replies), digital photos, videos, audio files, links, and/or other electronic content. Users of the social-networking service can also annotate information posted by other users of the social-networking service (e.g., endorsing or "liking" a posting of another user, or commenting on a posting by another user). In some embodiments, information can be posted on a user's behalf by systems and/or services external to the social-network system 108. For example, the user may post a review of a movie to a movie-review website, and with proper permissions that website may cross-post the review to the social network system 108 on the user's behalf. In another example, a software application executing on a mobile client device, with proper permissions, may use global positioning system (GPS) or other geo-location capabilities (e.g., Wi-Fi or hybrid positioning systems) to determine the user's location and update the social network system 108 with the user's location (e.g., "At Home", "At Work", or "In San Francisco, CA"), and/or update the social network system 108 with information derived from and/or based on the user's location. Users interacting with the client devices 104 can also use the social-networking service provided by the social-network system 108 to define groups of users. Users interacting with the client devices 104 can also use the social-networking service provided by the social-network system 108 to communicate and collaborate with each other.

In some embodiments, the network architecture 100 also includes third-party servers 110-1, 110-2, ... 110-m. In some embodiments, a given third-party server 110 is used to host third-party websites that provide web pages to client devices 104, either directly or in conjunction with the social-network system 108. In some embodiments, the social-network system 108 uses inline frames ("iframes") to nest independent websites within a user's social network session. In some embodiments, a given third-party server is used to host third-party applications that are used by client devices 104, either directly or in conjunction with the social-network system 108. In some embodiments, the social-network system 108 uses iframes to enable third-party developers to create applications that are hosted separately by a third-party server 110, but operate within a social-networking session of a user and are accessed through the user's profile in the social-network system 108. Exemplary third-party applications include applications for books, business, communication, contests, education, entertainment, fashion, finance, food and drink, games, health and fitness, lifestyle, local information, movies, television, music and audio, news, photos, video, productivity, reference material, security, shopping, sports, travel, utilities, and the like. In some embodiments, a given third-party server 110 is used to host enterprise systems, which are used by client devices 104, either directly or in conjunction with the social-network system 108. In some embodiments, a given third-party server 110 is used to provide third-party content (e.g., news articles, reviews, message feeds, etc.).

In some embodiments, a given third-party server 110 is a single computing device, while in other embodiments, a given third-party server 110 is implemented by multiple computing devices working together to perform the actions of a server system (e.g., cloud computing).

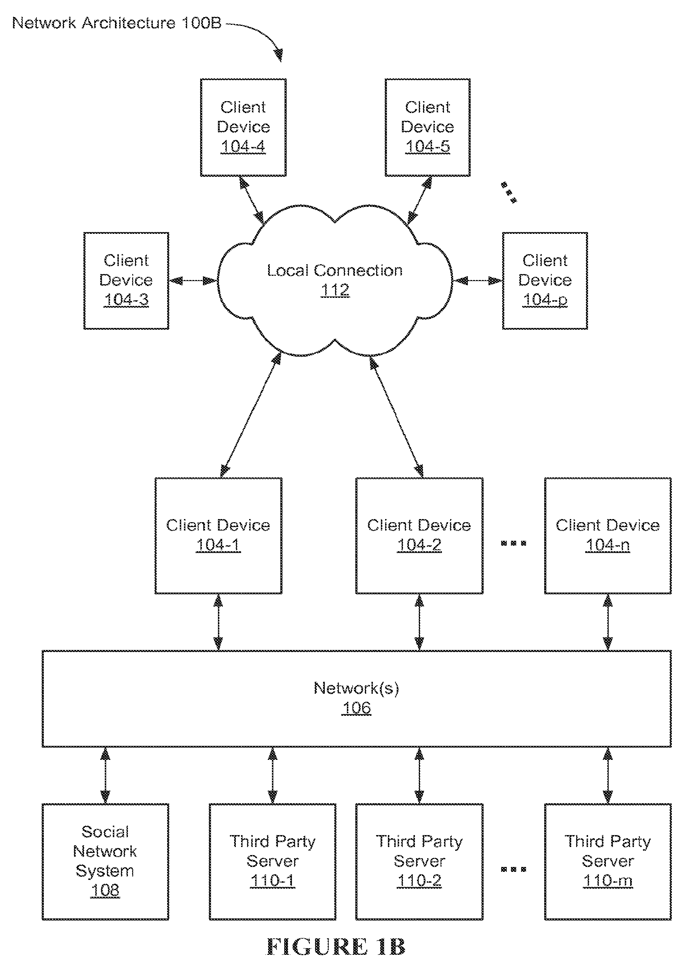

Figure 1B illustrates another network architecture 100B of a social network in accordance with some embodiments. In contrast to the network architecture 100A (Figure 1A), the client device 104-2 is directly connected to the one or more networks 106. The client device 104-2 may access, transmit data to, and/or retrieve content (e.g., installation files for an application) provided by the social network system 108 (or any device, system, or server connected to the network 106) directly through the one or more networks 106 and/or indirectly through the client device 104-1 using the local connection 112. The network architecture 100B is advantageous, for example, in situations in which the direct connection of the client device 104-2 to the one or more networks 106 is slow (e.g., has low bandwidth), congested, or otherwise impractical or unavailable.

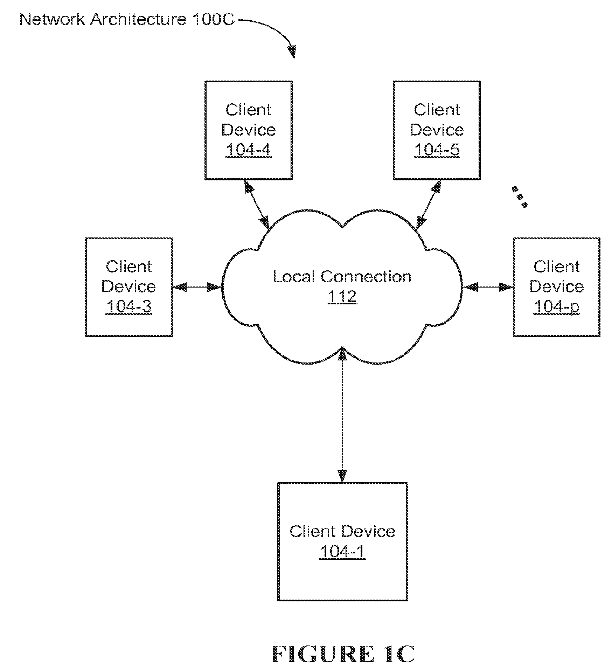

Figure 1C illustrates a network architecture 100C in which devices are interconnected through a local connection 112, in accordance with some embodiments. As shown, client devices (e.g., 104-1 and 104-3 through 104-p) are communicably connected to each other through the local connection 112 (e.g., connected using a Bluetooth wireless interface, forming a Personal Area Network, or using a wireless P2P protocol). In the network architecture 100C, client device 104-1 is not connected to the social-network system 108 (e.g., because it has lost its connection to the one or more networks 106).

Client devices 104 may be interconnected based on a variety of network topologies. For example, in some embodiments, each client device (e.g., 104-1 and 104-3 through 104-p) is connected to each of the other client devices through the local connection 112. In other embodiments, client devices are connected only to some of the other client devices in the network architecture (e.g., client device 104-1 is only connected to client device 104-3, and client device 104-3 is connected only to client devices 104-1 and 104-4). In some embodiments, one client device acts as a host device with which all other client devices are connected through the local connection 112 (e.g., each of the client devices 104-3 to 104-p are connected to client device 104-1, but not to any other client devices), from which content is retrieved (e.g., installation files) and through which content can be transmitted (e.g., social media posts). In some embodiments, multiple client devices together serve as host devices from which one or more client devices may retrieve content (e.g., client devices 104-1 and 104-3 send different portions of installation files to client device 104-4).

Client devices 104 may be interconnected through the local connection 112 using multiple communications protocols and interfaces. For example, in one implementation, the client device 104-1 may be paired with client device 104-3 using a Bluetooth wireless interface, while simultaneously the client device 104-1 is connected to the client device 104-4 using an NFC wireless interface.

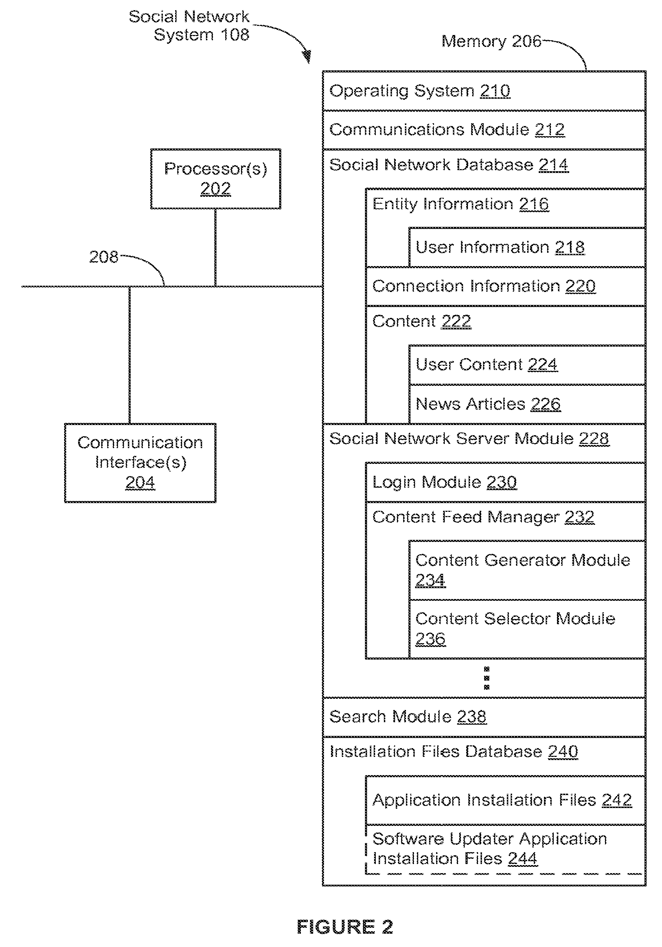

Figure 2 is a block diagram illustrating an exemplary social-network system 108 in accordance with some embodiments. The social-network system 108 typically includes one or more processing units (processors or cores) 202, one or more network or other communications interfaces 204, memory 206, and one or more communication buses 208 for interconnecting these components. The communication buses 208 optionally include circuitry (sometimes called a chipset) that interconnects and controls communications between system components. The social-network system 108 optionally includes a user interface (not shown). The user interface, if provided, may include a display device and optionally includes inputs such as a keyboard, mouse, trackpad, and/or input buttons. Alternatively or in addition, the display device includes a touch-sensitive surface, in which case the display is a touch-sensitive display.

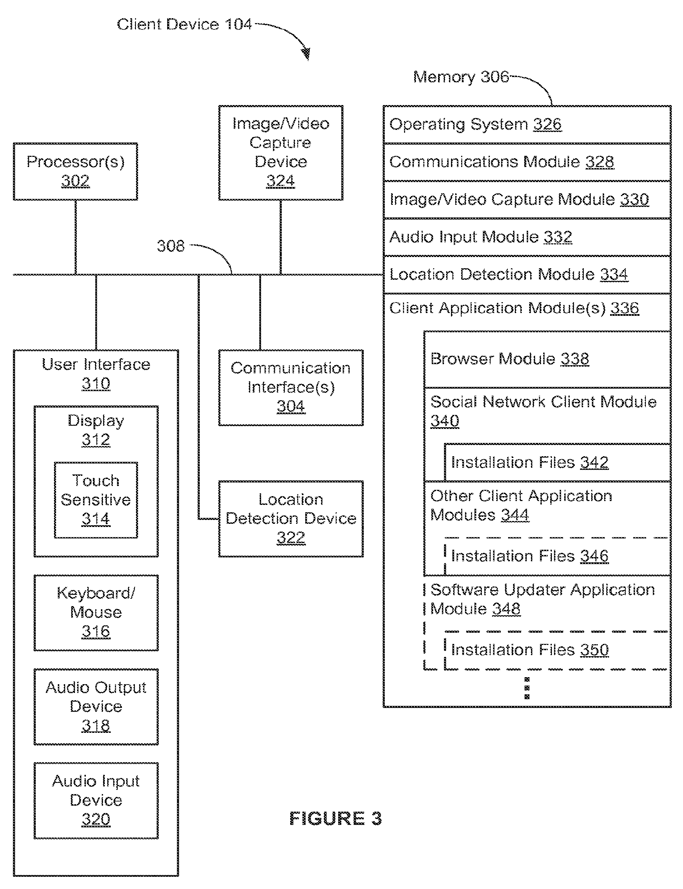

Memory 206 includes high-speed random-access memory, such as DRAM, SRAM, DDR RAM, or other random-access solid-state memory devices; and may include non-volatile memory, such as one or more magnetic disk storage devices, optical disk storage devices, flash memory devices, and/or other non-volatile solid-state storage devices. Memory 206 may optionally include one or more storage devices remotely located from the processor(s) 202. Memory 206, or alternately the non-volatile memory device(s) within memory 206, includes a non-transitory computer-readable storage medium. In some embodiments, memory 206 or the computer-readable storage medium of memory 206 stores the following programs, modules and data structures, or a subset or superset thereof:
- an operating system 210 that includes procedures for handling various basic system services and for performing hardware dependent tasks;
- a network communication module 212 that is used for connecting the social-network system 108 to other computers via the one or more communication network interfaces 204 (wired or wireless) and one or more communication networks (e.g., the one or more networks 106)
- a social network database 214 for storing data associated with the social network, such as:
   ∘ entity information 216, such as user information 218;
   ∘ connection information 220; and
   ∘ content 222, such as user content 224 and/or news articles 226;
- a social network server module 228 for providing social-networking services and related features (e.g., in conjunction with browser module 338 or social network client module 340 on the client device 104, Figure 3), which includes:
   ∘ a login module 230 for logging a user at a client 104 into the social-network system 108; and
   ∘ a content feed manager 232 for providing content to be sent to clients 104 for display, which includes:
      ▪ a content generator module 234 for adding objects to the social network database 214, such as images, videos, audio files, comments, status messages, links, applications, and/or other entity information 216, connection information 220, or content 222; and
      ▪ a content selector module 236 for choosing the information/content to be sent to clients 104 for display;
- a search module 238 for enabling users of the social-network system to search for content and other users in the social network; and
- an installation files database 240 for storing installation files of applications (e.g., for downloading to and installation on client devices 104, Figures 1A-1B), which includes:
   o application installation files 242 for installing an application (e.g., social network client module 340, optional client application modules 344, etc., Figure 3), which may include installation files for a plurality of versions of a respective application; and
   ∘ software updater application installation files 244 for installing an application that facilitates the installation and/or updating of a respective application on a device (e.g., software updater application module 348, Figure 3).

The social network database 214 stores data associated with the social network in one or more types of databases, such as graph, dimensional, flat, hierarchical, network, object-oriented, relational, and/or XML databases.

In some embodiments, the social network database 214 includes a graph database, with entity information 216 represented as nodes in the graph database and connection information 220 represented as edges in the graph database. The graph database includes a plurality of nodes, as well as a plurality of edges that define connections between corresponding nodes. In some embodiments, the nodes and/or edges themselves are data objects that include the identifiers, attributes, and information for their corresponding entities, some of which are rendered at clients 104 on corresponding profile pages or other pages in the social-networking service. In some embodiments, the nodes also include pointers or references to other objects, data structures, or resources for use in rendering content in conjunction with the rendering of the pages corresponding to the respective nodes at clients 104.

Entity information 216 includes user information 218, such as user profiles, login information, privacy and other preferences, biographical data, and the like. In some embodiments, for a given user, the user information 218 includes the user's name, profile picture, contact information, birth date, sex, marital status, family status, employment, education background, preferences, interests, and/or other demographic information.

In some embodiments, entity information 216 includes information about a physical location (e.g., a restaurant, theater, landmark, city, state, or country), real or intellectual property (e.g., a sculpture, painting, movie, game, song, idea/concept, photograph, or written work), a business, a group of people, and/or a group of businesses. In some embodiments, entity information 216 includes information about a resource, such as an audio file, a video file, a digital photo, a text file, a structured document (e.g., web page), or an application. In some embodiments, the resource is located in the social-network system 108 (e.g., in content 222) or on an external server, such as third-party server 110.

In some embodiments, connection information 220 includes information about the relationships between entities in the social network database 214. In some embodiments, connection information 220 includes information about edges that connect pairs of nodes in a graph database. In some embodiments, an edge connecting a pair of nodes represents a relationship between the pair of nodes.

In some embodiments, an edge includes or represents one or more data objects or attributes that correspond to the relationship between a pair of nodes. For example, when a first user indicates that a second user is a "friend" of the first user, the social-network system 108 transmits a "friend request" to the second user. If the second user confirms the "friend request," the social-network system 108 creates and stores an edge connecting the first user's user node and the second user's user node in a graph database as connection information 220 that indicates that the first user and the second user are friends. In some embodiments, connection information 220 represents a friendship, a family relationship, a business or employment relationship, a fan relationship, a follower relationship, a visitor relationship, a subscriber relationship, a superior/subordinate relationship, a reciprocal relationship, a non-reciprocal relationship, another suitable type of relationship, or two or more such relationships.

In some embodiments, an edge between a user node and another entity node represents connection information about a particular action or activity performed by a user of the user node towards the other entity node. For example, a user may "like" or have "attended," "played," "listened," "cooked," "worked at," or "watched" the entity at the other node. The page in the social-networking service that corresponds to the entity at the other node may include, for example, a selectable "like," "check in," or "add to favorites" icon. After the user clicks one of these icons, the social-network system 108 may create a "like" edge, "check in" edge, or a "favorites" edge in response to the corresponding user action. As another example, the user may listen to a particular song using a particular application (e.g., an online music application). In this case, the social-network system 108 may create a "listened" edge and a "used" edge between the user node that corresponds to the user and the entity nodes that correspond to the song and the application, respectively, to indicate that the user listened to the song and used the application. In addition, the social-network system 108 may create a "played" edge between the entity nodes that correspond to the song and the application to indicate that the particular song was played by the particular application.

In some embodiments, content 222 includes text (e.g., ASCII, SGML, HTML), images (e.g., jpeg, tif and gif), graphics (e.g., vector-based or bitmap), audio, video (e.g., mpeg), other multimedia, and/or combinations thereof. In some embodiments, content 222 includes executable code (e.g., games executable within a browser window or frame), pod-casts, links, and the like.

In some embodiments, the social network server module 228 includes web or Hypertext Transfer Protocol (HTTP) servers, File Transfer Protocol (FTP) servers, as well as web pages and applications implemented using Common Gateway Interface (CGI) script, PHP Hyper-text Preprocessor (PHP), Active Server Pages (ASP), Hyper Text Markup Language (HTML), Extensible Markup Language (XML), Java, JavaScript, Asynchronous JavaScript and XML (AJAX), XHP, Javelin, Wireless Universal Resource File (WURFL), and the like.

Figure 3 is a block diagram illustrating an exemplary client device 104 in accordance with some embodiments. The client device 104 typically includes one or more processing units (processors or cores) 302, one or more network or other communications interfaces 304, memory 306, and one or more communication buses 308 for interconnecting these components. The communication buses 308 optionally include circuitry (sometimes called a chipset) that interconnects and controls communications between system components. Communications interfaces 304 include wired interfaces (e.g., Ethernet, Universal Serial Bus (USB), Firewire, etc.) and/or wireless interfaces (e.g., IEEE 802.15.4, Wi-Fi, ZigBee, 6LoWPAN, Thread, Z-Wave, Bluetooth, ISA100.11a, WirelessHART, MiWi, NFC, etc.). The client device 104 includes a user interface 310. The user interface 310 typically includes a display device 312. In some embodiments, the client device 104 includes inputs such as a keyboard, mouse, and/or other input buttons 316. Alternatively or in addition, in some embodiments, the display device 312 includes a touch-sensitive surface 314, in which case the display device 312 is a touch-sensitive display. In client devices that have a touch-sensitive display 312, a physical keyboard is optional (e.g., a soft keyboard may be displayed when keyboard entry is needed). The user interface 310 also includes an audio output device 318, such as speakers or an audio output connection connected to speakers, earphones, or headphones. Furthermore, some client devices 104 use a microphone and voice recognition to supplement or replace the keyboard. Optionally, the client device 104 includes an audio input device 320 (e.g., a microphone) to capture audio (e.g., speech from a user). Optionally, the client device 104 includes a location detection device 322, such as a GPS (global positioning satellite) or other geo-location receiver, for determining the location of the client device 104. The client device 104 also optionally includes an image/video capture device 324, such as a camera or webcam.

Memory 306 includes high-speed random-access memory, such as DRAM, SRAM, DDR RAM or other random-access solid-state memory devices; and may include non-volatile memory, such as one or more magnetic disk storage devices, optical disk storage devices, flash memory devices, or other non-volatile solid-state storage devices. Memory 306 may optionally include one or more storage devices remotely located from the processor(s) 302. Memory 306, or alternately the non-volatile memory device(s) within memory 306, includes a non-transitory computer-readable storage medium. In some embodiments, memory 306 or the computer-readable storage medium of memory 306 stores the following programs, modules and data structures, or a subset or superset thereof:
- an operating system 326 that includes procedures for handling various basic system services and for performing hardware dependent tasks;
- a network communication module 328 that is used for connecting the client device 104 to other computers via the one or more communication network interfaces 304 (wired or wireless) and one or more communication networks, such as the Internet, cellular telephone networks, mobile data networks, other wide area networks, local area networks, metropolitan area networks, and so on;
- an image/video capture module 330 (e.g., a camera module) for processing a respective image or video captured by the image/video capture device 324, where the respective image or video may be sent or streamed (e.g., by a client application module 336) to the social-network system 108;
- an audio input module 332 (e.g., a microphone module) for processing audio captured by the audio input device 320, where the respective audio may be sent or streamed (e.g., by a client application module 336) to the social-network system 108;
- a location detection module 334 (e.g., a GPS, Wi-Fi, or hybrid positioning module) for determining the location of the client device 104 (e.g., using the location detection device 322) and providing this location information for use in various applications (e.g., social network client module 340); and
- one or more client application modules 336, including the following modules (or sets of instructions), or a subset or superset thereof:
   ∘ a web browser module 338 (e.g., Internet Explorer by Microsoft, Firefox by Mozilla, Safari by Apple, or Chrome by Google) for accessing, viewing, and interacting with web sites (e.g., a social-networking web site provided by the social-network system 108),
   ∘ a social network module 340 for providing an interface to a social-networking service (e.g., a social-networking service provided by social-network system 108) and related features, which includes installation files 342 (e.g., application installation files 242, Figure 2) corresponding to one or more versions of the social network module 340;
   ∘ other optional client application modules 344, such as applications for word processing, calendaring, mapping, weather, stocks, time keeping, virtual digital assistant, presenting, number crunching (spreadsheets), drawing, instant messaging, e-mail, telephony, video conferencing, photo management, video management, a digital music player, a digital video player, 2D gaming, 3D (e.g., virtual reality) gaming, electronic book reader, and/or workout support, which include installation files 346 (e.g., application installation files 242, Figure 2) corresponding to one or more versions of respective optional client application modules 344; and/or
   ∘ a software updater application module 348 for facilitating the installation and/or updating of one or more versions of an application (e.g., social network module 340) on a device , including performing compatibility checks to determine compatible version of applications for a respective electronic device, wherein the software updater application module 348 includes installation files 350 (e.g., software updater application installation files 244, Figure 2) for installing the software updater application module 348.

Each of the above identified modules and applications correspond to a set of executable instructions for performing one or more functions as described above and/or in the methods described in this application (e.g., the computer-implemented methods and other information processing methods described herein). These modules (i.e., sets of instructions) need not be implemented as separate software programs, procedures or modules, and thus various subsets of these modules are, optionally, combined or otherwise re-arranged in various embodiments. In some embodiments, memory 206 and/or 306 store a subset of the modules and data structures identified above. Furthermore, memory 206 and/or 306 optionally store additional modules and data structures not described above.

Attention is now directed towards embodiments of graphical user interfaces ("GUIs") and associated processes that may be implemented on a client device (e.g., the client device 104 in Figure 3).

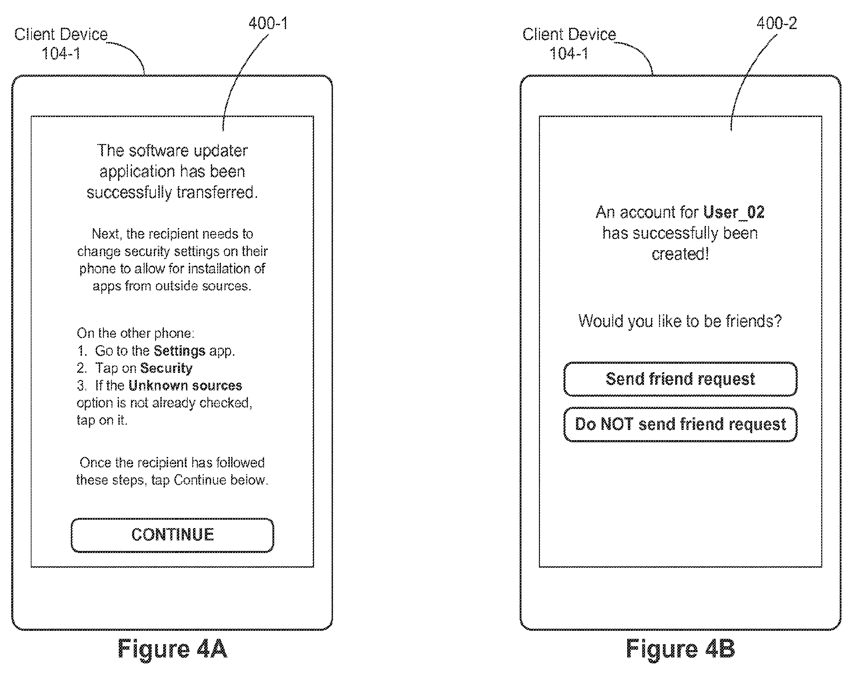

Figures 4A-4B illustrate exemplary GUIs on a client device 104 for facilitating application installation and user-association requests, in accordance with some embodiments. The GUIs may be provided by a web browser (e.g., web browser module 338, Figure 3), an application for a social-networking service (e.g., social network module 340), a third-party application (e.g., client application module 344), and/or a software updater application (e.g., software updater application module 348). While Figures 4A-4B illustrate examples of GUIs, in other embodiments, a GUI displays user-interface elements in arrangements distinct from the embodiments of Figures 4A-4B.

Figure 4A illustrates a message 400-1 displayed on an electronic device (e.g., client device 104-1, Figure 1A) which includes instructions for updating security settings on a different electronic device (e.g., client device 104-3, Figure 1A) to enable installation of a version of an application. In some embodiments, the instructions are instructions for updating security settings to enable installation of applications from outside sources (e.g., installation files retrieved from other devices through a local connection 112, such as a social network module 340 and/or a software updater application module 348, Figure 3).

Figure 4B illustrates a message 400-2 displayed on an electronic device (e.g., client device 104-1, Figure 1A) prompting a user associated with the electronic device to associate with (become a friend or contact of) a different user of another electronic device (e.g., a user associated with client device 104-3, Figure 1A) on a social networking service after sending a request to create an account. As shown, the GUI in Figure 4B includes optional user interface elements which allow a user of the client device 104-1 to either send or decline to send the request.

Displaying the messages shown in Figures 4A and 4B is described in greater detail with respect to the method 500.

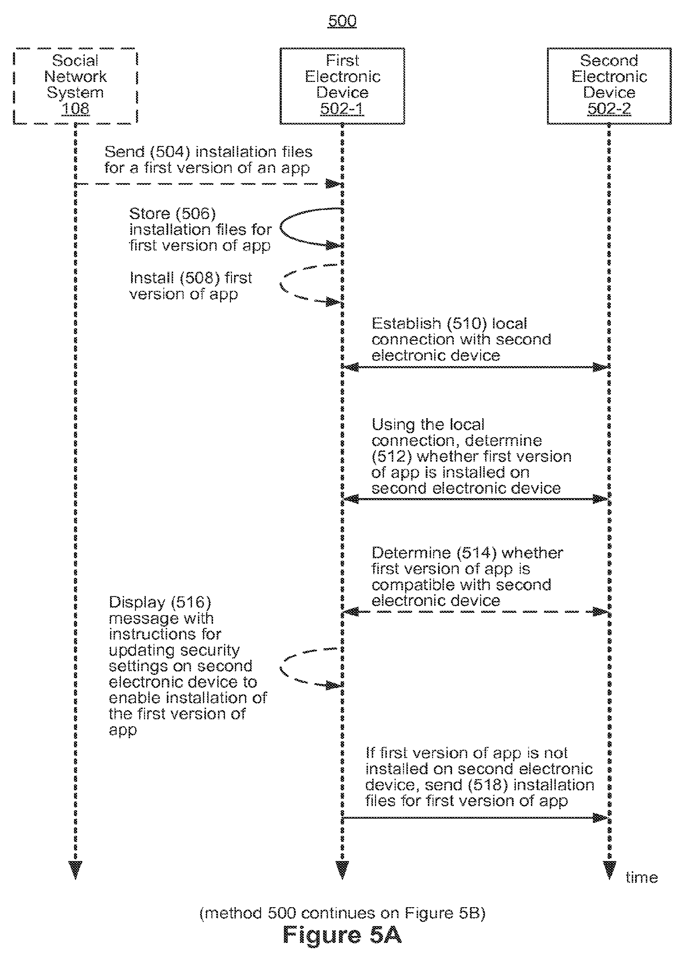

Figures 5A-5B are flow diagrams illustrating the method 500 of installing a version of an application using a local connection (e.g., local connection 112, Figures 1A-1C), in accordance with some embodiments. The method 500 is performed by the social network system 108 (or other server system), a first electronic device 502-1 (e.g., client device 104-1, Figures 1A-1C and 3), and a second electronic device 502-2 (e.g., client device 104-3, Figures 1A-1C and 3). Operations performed in Figures 5A-5B correspond to instructions stored in a computer memory (e.g., memory 306 of a client device 104, Figure 3) or other computer-readable storage medium.

In some embodiments, the social network system 108 (e.g., Figures 1A and 2) sends (504) installation files for a first version of an application to the first electronic device 502-1, which receives the installation files (e.g., application installation files 242 in Figure 2, which correspond to installation files 342 of the social network client module 340 in Figure 3) from the social network system 108. In some embodiments, the first version of the application is a most-recent and up-to-date version of the application (e.g., the most-recent version of the social network client module 340). Optionally, in some embodiments, the social network system 108 sends installation files for a software updater application (e.g., software updater application installation files 244 in Figure 2, which correspond to installation files 350 of the software updater application module 348 in Figure 3) to the first electronic device 502-1 (e.g., client device 104-1, Figures 1A-1C), which receives the installation files from the social network system 108. The installation files are sent, for example, over the one or more networks 106 (Figures 1A-1B).

The first electronic device 502-1 stores (506) the installation files for the first version of the application received from the social network system 108 (e.g., in memory 306, Figure 3) and optionally installs (508) the first version of the application. In some embodiments, the first electronic device 502-1 also stores the installation files for the software updater application (e.g., in memory 306, Figure 3) and optionally installs the software updater application.

The first electronic device 502-1 (e.g., client device 104-1, Figures 1A-1C) establishes (510) a local connection (e.g., local connection 112, Figures 1A-1B) with the second electronic device 502-2, which thereby establishes the local connection with the first electronic device. The local connection is independent of Internet connectivity (e.g., is independent of any connection of the client device 104-1 to the one or more networks 106). In some embodiments, establishing the local connection includes pairing the first electronic device 502-1 with the second electronic device 502-2 using a wireless communications protocol (e.g., Bluetooth). In some embodiments, establishing the local connection includes connecting to the second electronic device 502-2 over a personal-area network. In some embodiments, establishing the local connection includes connecting to the second electronic device 502-2 over a peer-to-peer network.

In some embodiments, establishing the local connection is performed in response to a determination that a congestion threshold for the Internet connectivity is satisfied. (Subsequent operations, such as sending (518) installation files, may also be performed at least in part in response to this determination.) A congestion threshold may include a predefined minimum available network bandwidth (e.g., bits per seconds), data rate, network latency, or other performance metric of a network connection through which an electronic device accesses the Internet (e.g., measured network bandwidth over a network 106, Figure 1A). As an example, if the predefined minimum network bandwidth is 100 Mbits/sec, and the second electronic device 502-2 measures a network bandwidth of 90 Mbits/sec over the network 106 (Figure 1), the congestion threshold is satisfied and a local connection (e.g., Bluetooth) is established with another electronic device in close proximity. In some embodiments, establishing the local connection is performed in response to a determination that a measured performance metric of the local connection (e.g., Bluetooth data rate) exceeds a measured performance metric of a network connection through which the electronic devices 502-1 and/or 502-2 access the Internet (e.g., network bandwidth achieved over Wi-Fi). In some embodiments, establishing the local connection is performed in response to a determination that the second electronic device 502-2 cannot establish Internet connectivity (e.g., cellular data and/or connection to the network 106 over Wi-Fi are unavailable).

Using the local connection, the first electronic device 502-1 (or the second electronic device 502-2) determines (512) whether the first version of the application is installed on the second electronic device 502-2. In some embodiments, the determining (512) includes the first electronic device 502-1 or the second electronic device 502-2 determining whether any version of the application is installed on the second electronic device. For example, the first electronic device 502-1 may indicate to the second electronic device 502-2 that a version of the application is installed on the first electronic device or that installation files for a version of the application are available on the first electronic device. Based on this indication, the second electronic device 502-2 determines whether any version of the same application is installed on the second electronic device 502-2. Alternatively, the second electronic device 502-2 may indicate to the first electronic device 502-1 (e.g., by providing a list of all installed applications) that a version of the application is installed on the second electronic device 502-2.

In some embodiments, the determining (512) includes the first electronic device 502-1 or the second electronic device 502-2 determining whether a second version of the application that predates the first version of the application is installed on the second electronic device 502-2 (e.g., comparing versions of the application or corresponding installation files stored on the first and second electronic devices to determine that the version on the second electronic device is an outdated version). For example, the first electronic device 502-1 may indicate to the second electronic device 502-2 that a first version of the application is installed on the first electronic device 502-1. Based on this indication, the second electronic device 502-2 then compares a version of the application installed the second electronic device 502-2 with the first version to determine whether the version installed the second electronic device 502-2 is outdated. The comparison may yield a determination that the version installed on the second electronic device 502-2 is an outdated version, the same version, or a more up-to-date version. Alternatively, the second electronic device 502-2 may indicate to the first electronic device 502-1 that a second version of the application is installed on the second electronic device 502-2. Based on this indication, the first electronic device 502-1 then compares the first version of the application installed the first electronic device 502-1 with the second version to determine whether the version installed the second electronic device 502-2 is outdated.

In some embodiments, the determining (512) includes providing a software updater application to the second electronic device 502-2 through the local connection (e.g., transferring the installation files 350 of the software updater application module 348, Figure 3) for installation on the second electronic device 502-2, where the second electronic device 502-2 receives the software updater application through the local connection. The software updater application is then installed on the second electronic device 502-2. In some embodiments, the software updater application (e.g., software updater application module 348) includes instructions for determining if and what version of the application (e.g., social network client module 340, Figure 3) is installed on the second electronic device 502-2. Subsequently, the software updater application on the second electronic device 502-2 sends and the first electronic device 502-1 receives, through the local connection, an indication of whether the first version of the application is installed on the second electronic device (e.g., whether any version of the application is installed and/or whether the first version of the application is installed).

In some embodiments, after establishing (510) the local connection, the first electronic device 502-1 periodically (or continuously) transmits (e.g., broadcasts) over the local connection a list of applications (and their respective versions) stored on the first electronic device 502-1 that it is authorized to distribute. Based on the transmissions (e.g., broadcasts) from the first electronic device 502-1, electronic devices connected to the first electronic device over the local connection may identify available versions of applications that may be obtained from the first electronic device 502-1 over the local connection.

In some embodiments, the first electronic device 502-1 or the second electronic device 502-2 determines (514) whether the first version of the application is compatible with the second electronic device 502-2. Determining the compatibility of the first version of the application may include identifying one or more hardware (e.g., processor type, device manufacturer, chipset, etc.) and/or software (e.g., operating system) specifications of the second electronic device 502-2 (and optionally the first electronic device 502-1), and determining whether the first version of the application is compatible with the identified specifications. In some embodiments, determining the compatibility of the first version of the application includes referencing entries of a table (e.g., an Android application package ("APK") matrix) which stores a list of compatible device specifications for different versions of the application. In some embodiments, the compatibility check (514) is performed by the software updater application (512) (e.g., software updater application module 348, Figure 3).

In response to a determination that the first version of the application is not installed on the second electronic device 502-2 (and, in some embodiments, that the first version is compatible with the hardware and/or software (e.g., operating system) of the second electronic device), the first electronic device 502-1 sends (518) to the second electronic device and the second electronic device 502-2 receives from the first electronic device, through the local connection, the one or more installation files for the first version of the application (e.g., installation files 342 for a social network client module 340, Figure 3). For example, if it is determined that a most-recent (i.e., up-to-date) version of the social network client module 340 (e.g., an application providing an interface for a social networking service) is stored on the first electronic device 502-1 but not installed on the second electronic device 502-2 (e.g., the version of the application installed on the second electronic device 502-2 is outdated), the first electronic device 502-1 sends installation files 342 for the most-recent version to the second electronic device 502-2 through an established local connection (e.g., a Bluetooth connection), rather than over a separate Internet-based network interface. The second electronic device 502-2 thus receives the installation files independently of Internet access or access to any network wider than the local connection 112) (e.g., without connecting to the social network system 108 over a network 106, Figure 1A).

In some embodiments, the determination (512) is a determination that the second version of the application is installed on the second electronic device 502-2 (i.e., a version that predates the first version stored on the first electronic device 502-1), and the one or more installation files include updates for updating the application on the second electronic device 502-2 from the second version to the first version. Thus, in some implementations, if it is determined that the receiving device is storing an outdated version of an application, only files for updating the application are sent, rather than an installation package for the entire application.

In some embodiments, the determination (512) is a determination that no version of the application is installed on the second electronic device, and the one or more installation files include one or more files for installing the first version of the application in its entirety, rather than installation files only for updating a previous version of the application.

In some embodiments, before sending (518) the one or more installation files, a message is displayed (516) on the first electronic device 502-1 with instructions for updating security settings on the second electronic device 502-2 to enable installation of the first version of the application. An example of the message is illustrated in and described with respect to Figure 4A.

In some embodiments, the first electronic device 502-1 is one of a plurality of electronic devices with which the second electronic device 502-2 can communicate over a local connection (e.g., one of a plurality of electronic devices within wireless communication range of the second electronic device 502-2), and the first electronic device 502-1 sends (518) and the second electronic device 502-2 receives the one or more installation files for the first version of the application in accordance with a determination that respective versions of the application on other electronic devices of the plurality of electronic devices predate the first version of the application. As an example, referring to Figure 1C, client devices 104-1, 104-4, and 104-5 store different versions of a social network client module 340 (and/or have installation files for different versions), and are all within wireless communication range of client device 104-3. If the client device 104-1 stores a most-recent (e.g., current) version of the social network client module 340 (relative to the respective versions stored on the other nearby client devices), only the client device 104-1 will send installation files 342 for the most-recent version to client device 104-3. In some embodiments, multiple nearby electronic devices storing respective versions of the application arbitrate among each other to identify one or more electronic devices having a most up-to-date (e.g., current) version of the application. In some implementations, after identifying the one or more electronic devices having the most up-to-date version of the application, the other electronic devices having outdated versions may disconnect from the local connection and/or discontinue broadcasting to other nearby devices (e.g., stop broadcasting to other devices that a version of the application is available to be transferred). In some embodiments, the second electronic device 502-2 (the "receiving device") receives indications from the multiple electronic devices within wireless communication range that identify respective versions of the application stored on the respective electronic devices. In some embodiments, upon identifying one or more electronic devices having a most up-to-date version of the application based on these indications, the second electronic device 502-2 disconnects from all other electronic devices connected through the local connection, while maintaining connection with and receiving installation files from the one or more electronic devices having a most up-to-date version. Alternatively, the second electronic device 502-2 remains connected with the other electronic devices but does not download installation files from them.

In some embodiments, the application is a first application of a plurality of applications stored on the first electronic device 502-1 and/or the second electronic device 502-2 (e.g., a client device 104-1 stores a browser module 338, a social network client module 340, and a client application module 344 in the memory 306). The first electronic device 502-1 sends (518) and the second electronic device 502-2 receives the one or more installation files for the first version of the application in accordance with a determination that a priority of the first application supersedes a priority of a second application on the second electronic device 502-2. For example, if the social network client module 340 has a predefined priority (e.g., represented by a numerical index value) that supersedes a predefined priority of the client application module 344, and updates are available for both modules, the first electronic device 502-1 will send installation files for the social network client module 340 before installation files for the client application module 344 are sent, if ever. In some embodiments, different versions of an application have respective priorities. For example, a first, more recent version of the social network client module 340 may have a greater priority than a second, older version. In this example, a first version of the client application module 344 may supersede the second version of the social network client module 340, while the first version of the social network client module 340 supersedes the first version of the client application module 344.

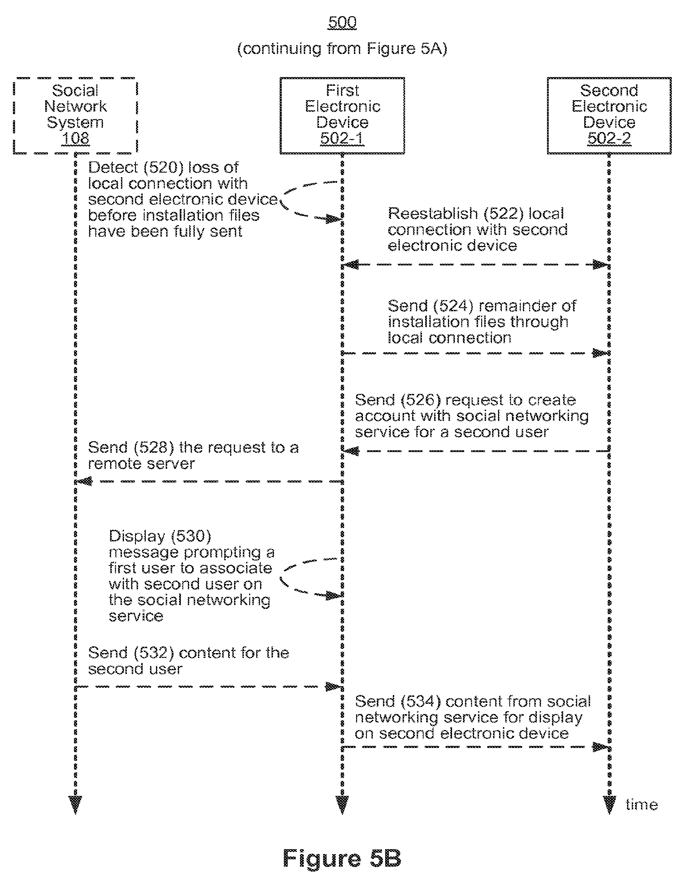

Referring now to Figure 5B, the first electronic device 502-1 sends (518) a portion of the installation files to the second electronic device 502-2, which receives all or a portion of them. For example, the first electronic device 502-1 sends a first plurality of packets through the local connection to the second electronic device, and the second electronic device 502-2 receives some or all of the first plurality of packets through the local connection from the first electronic device 502-1. While the installation files are being sent and received (e.g., in the form of corresponding packets), a loss of the local connection with the second electronic device is detected (520) prior to all installation files being transferred. At some later time (e.g., minutes, hours, or days after the disconnection), the local connection with the second electronic device is reestablished (522) (e.g., re-pairing of Bluetooth connection). In some embodiments, the same local connection is reestablished (e.g., if the original local connection was via Bluetooth, the reestablished local connection is also via Bluetooth), while in other embodiments, the reestablished local connection is based on a different communications protocol (e.g., the original local connection is via Bluetooth and the reestablished local connection is via Wi-Fi Direct). After reestablishing (522) the local connection, the first electronic device 502-1 sends (524) the remainder of the installation files through the local connection to the second electronic device 502-2, which receives them. For example, the first electronic device 502-1 sends a second plurality of packets through the local connection to the second electronic device 502-2, which receives them. The second plurality of packets corresponds to a remaining portion of the installation files that was not successfully transferred as a result of losing the local connection (520). In some embodiments, the second plurality of packets is received through a local connection between the second electronic device 502-2 and one or more other electronic devices distinct from the first electronic device 502-1 (i.e., the second electronic device 502-2 receives different portions of the installation files from multiple electronic devices). In these embodiments, the respective local connections established between the second electronic device and the one or more other electronic devices may use the same or distinct communications protocols (e.g., the second electronic device 502-2 connects to one electronic device via Bluetooth and another electronic device through Wi-Fi Direct).

In some embodiments, the application is an application for connecting to a social networking service (e.g., a social network client module 340 for connecting to a service provided by the social network system 108, Figures 1 and 3), and a first user associated with the first electronic device 502-1 is a user of the social networking service. After the first version of the application has been installed on the second electronic device, the second electronic device 502-2 sends (526) to the first electronic device 502-1, and the first electronic device 502-1 receives (526) from the second electronic device 502-2, through the local connection, a request to create an account with the social networking service for a second user associated with the second electronic device. This request may be automatically generated in response to installation of the social network client module 340 on the second electronic device 502-2, or may be generated in response to user input. The first electronic device 502-1 then sends (528) the request to a remote server through a communications channel distinct from the local connection (e.g., the first electronic device 502-1 sends an account-creation request received from the second electronic device 502-2 to the social network system 108 over the one or more networks 106 through a Wi-Fi or cellular connection). The first electronic device 502-1 may therefore be used as an intermediary for creating an account for a service provided by the social network system 108, even in the absence of direct Internet connectivity for the second electronic device 502-2.

In some embodiments, after the installation files for first version of the application have been sent to and received by the second electronic device 502-2 (518), a message is displayed (530) on the first electronic device 502-1 and/or the second electronic device 502-2 prompting the first user to associate with the second user on the social networking service (or prompting the second user to associate with the first user). An example of the message is illustrated in and described with respect to Figure 4B. In some embodiments, this association request is automatically generated in response to sending of the installation files to the second electronic device 502-2, installation of the application on the second electronic device 502-2, and/or creation of the account for the second user. In some embodiments, the message is displayed (530) after (e.g., in response to) the first electronic device 502-1 begins sending (518) and the second electronic device 502-2 beings receiving the installation files, regardless of whether the entirety of the installation files is transferred. In some embodiments, the first user and second user are automatically associated with each other on the social networking service (i.e., instructions/data regarding association request are automatically sent to the social network system 108) after the installation files are sent (518) and received (or alternatively, after the first electronic device 502-1 begins sending and the second electronic device 502-2 beings receiving the installation files). In some embodiments, a signal is automatically provided to the social network system 108 and input into a predefined association algorithm (e.g., PYMK ("People You May Know"), friend request algorithm, etc.).

In some embodiments in which the first and second users (associated with the first electronic device 502-1 and the second electronic device 502-2, respectively) are users of the social networking service, the first electronic device 502-1 receives (532) from the social networking service, and the social network system 108 sends to the first electronic device 502-1, through a communications channel distinct from the local connection (e.g., over the one or more networks 106), content for the second user. Content may include any content accessible by users on a social network system (e.g., feed content, posts, messages, audio/visual data, links, etc.). The first electronic device 502-1 sends (534) to the second electronic device 502-2, and the second electronic device 502-2 receives from the first electronic device 502-1, through the local connection (e.g., local connection 108), the content from the social networking service for display on the second electronic device. Thus, content provided by the social network system 108 may be accessed by electronic devices otherwise having limited or no Internet connectivity, but within proximity of other Internet-connected devices with which a local connection can be established. In some embodiments, sending (534) and receiving the content from the social networking service is done in accordance with a determination that the second electronic device 502-2 has no Internet connectivity. In some embodiments, content received (532) from the social networking service is cached in the memory of the first electronic device 502-1 for transmission at a later time, such that the first electronic device 502-1 can send the content to the second electronic device 502-2 even in the absence of Internet connectivity at the time of sending.

In some embodiments, the first electronic device 502-1 receives content (e.g., a post) from the second electronic device 502-2, and sends the received content to the social networking service through the communications channel distinct from the local connection (e.g., a user whose electronic device cannot establish Internet connectivity can post content on a social networking service through an Internet-connected electronic device with which a local connection is established).

In some embodiments, the method 500 in Figures 5A-5B (or a subset of operations) is performed in response to the determination that a congestion threshold for the Internet connectivity is satisfied (e.g., network bandwidth is below, or equal to or below, a predefined value), or a determination that the second device 502-2 cannot establish Internet connectivity (e.g., due to poor cellular data coverage or no Internet subscription).

Although the method 500 of Figures 5A-5B is described with respect to the second electronic device 502-2 receiving data (e.g., content, installation files, etc.) from the first electronic device 502-1, in some embodiments, the second electronic device 502-2 receives data from a plurality of distinct electronic devices, and the plurality of distinct electronic devices sends data to the second electronic device 502-2. The data received from and sent by the plurality of distinct electronic devices may include data for different items of content (e.g., one electronic device sends installation files for an application, while a different electronic device sends social media content (e.g., posts) retrieved from the social network system 108), or may include portions of the same item of content (e.g., different electronic devices transmit different portions of installation files for the same application).

For situations in which the systems discussed above collect information about users, the users may be provided with an opportunity to opt in/out of programs or features that may collect personal information (e.g., information about a user's preferences or a user's contributions to social content providers). In addition, in some embodiments, certain data may be anonymized in one or more ways before it is stored or used, so that personally identifiable information is removed. For example, a user's identity may be anonymized so that the personally identifiable information cannot be determined for or associated with the user, and so that user preferences or user interactions are generalized (for example, generalized based on user demographics) rather than associated with a particular user.

Although some of various drawings illustrate a number of logical stages in a particular order, stages which are not order dependent may be reordered and other stages may be combined or broken out. While some reordering or other groupings are specifically mentioned, others will be apparent to those of ordinary skill in the art, so the ordering and groupings presented herein are not an exhaustive list of alternatives. Moreover, it should be recognized that the stages could be implemented in hardware, firmware, software or any combination thereof.

The foregoing description, for purpose of explanation, has been described with reference to specific embodiments. However, the illustrative discussions above are not intended to be exhaustive or to limit the scope of the claims to the precise forms disclosed. Many modifications and variations are possible in view of the above teachings. The embodiments were chosen in order to best explain the principles underlying the claims and their practical applications, to thereby enable others skilled in the art to best use the embodiments with various modifications as are suited to the particular uses contemplated.

## Claims

1. A method, comprising:
at a first electronic device with one or more processors and memory storing instructions for execution by the one or more processors:
storing in the memory one or more installation files for a first version of an application;
establishing a local connection with a second electronic device, the local connection being independent of Internet connectivity;
using the local connection, determining whether the first version of the application is installed on the second electronic device; and
in response to a determination that the first version of the application is not installed on the second electronic device, sending, to the second electronic device through the local connection, the one or more installation files for the first version of the application.

2. The method of claim 1, wherein establishing the local connection comprises pairing the first electronic device with the second electronic device using a wireless communications protocol; and/or
connecting to the second electronic device over a personal-area network; and/or connecting to the second electronic device over a peer-to-peer network.

3. The method of claim 1 or 2, wherein establishing the local connection is performed:
in response to a determination that a congestion threshold for the Internet connectivity is satisfied; and/or
in response to a determination that the second device cannot establish Internet connectivity.

4. The method of any of claims 1 to 3, wherein:
determining whether the first version of the application is installed on the second electronic device comprises determining whether a second version of the application that predates the first version of the application is installed on the second electronic device;
the determination that the first version of the application is not installed on the second electronic device is a determination that the second version of the application is installed on the second electronic device, and
the one or more installation files for the first version of the application comprise updates for updating the application on the second electronic device from the second version to the first version.

5. The method of any of claims 1 to 4, wherein:
determining whether the first version of the application is installed on the second electronic device comprises determining whether any version of the application is installed on the second electronic device;
the determination that the first version of the application is not installed on the second electronic device is a determination that no version of the application is installed on the second electronic device, and
the one or more installation files for the first version of the application comprise one or more files for installing the first version of the application in its entirety.

6. The method of any of claims 1 to 5, wherein determining whether the first version of the application is installed on the second electronic device comprises:
providing a software updater application to the second electronic device through the local connection, for installation on the second electronic device; and
receiving, from the software updater application on the second electronic device,
through the local connection, an indication of whether the first version of the application is installed on the second electronic device.

7. The method of any of claims 1 to 6, further comprising, before sending the one or more installation files, displaying a message on the first electronic device with instructions for updating security settings on the second electronic device to enable installation of the first version of the application.

8. The method of any of claims 1 to 7, wherein the application is an application for connecting to a social networking service, and a first user associated with the first electronic device is a user of the social networking service, the method further comprising, at the first electronic device:
after the first version of the application has been installed on the second electronic device:
receiving, from the second electronic device through the local connection, a request to create an account with the social networking service for a second user associated with the second electronic device; and
sending the request to a remote server through a communications channel distinct from the local connection;
preferably further comprising automatically displaying a message on the first electronic device prompting the first user to associate with the second user on the social networking service after sending the request to create the account to the remote server.

9. The method of any of claims 1 to 8, wherein the application is an application for connecting to a social networking service, and a first user associated with the first electronic device and a second user associated with the second electronic device are users of the social networking service, the method further comprising, at the first electronic device:
receiving, from the social networking service through a communications channel distinct from the local connection, content for the second user; and
sending, to the second electronic device through the local connection, the content from the social networking service for display on the second electronic device;
preferably wherein sending the content from the social networking service is performed in accordance with a determination that the second electronic device has no Internet connectivity.

10. The method of any of claims 1 to 9, wherein:
sending the one or more installation files for the first version of the application comprises:
sending a first plurality of packets through the local connection to the second electronic device,
after sending the first plurality of packets, detecting loss of the local connection with the second electronic device,
reestablishing the local connection with the second electronic device, and
after reestablishing the local connection, sending a second plurality of packets through the local connection to the second electronic device.

11. The method of any of claims 1 to 10, wherein:
the first electronic device is one of a plurality of electronic devices within wireless communication range of the second electronic device; and
the first electronic device sends the one or more installation files for the first version of the application in accordance with a determination that respective versions of the application on other electronic devices of the plurality of electronic devices predate the first version of the application.

12. The method of any of claims 1 to 11, wherein:
the application is a first application; and
the first electronic device sends the one or more installation files for the first version of the application in accordance with a determination that a priority of the first application supersedes a priority of a second application on the second electronic device.

13. The method of any of claims 1 to 12, further comprising determining whether the first version of the application is compatible with the second electronic device;
wherein sending the one or more installation files to the second electronic device through the local connection is performed in further response to a determination that the first version of the application is compatible with the second electronic device.

14. A system comprising: one or more processors; and at least one memory coupled to the processors and comprising instructions executable by the processors, the processors operable when executing the instructions to perform a method according to any of the claims 1 to 13.

15. A non-transitory computer-readable storage medium storing one or more programs for execution by one or more processors of a first electronic device, the one or more programs including instructions to perform a method according to any of the claims 1 to 13.
